# EUROPEAN PATENT APPLICATION

(11) **EP 1 594 306 A1**
(43) Date of publication of application: **09.11.2005**
(21) Application number: 05103217.5
(22) Date of filing: 21.04.2005
(51) Int. Cl.: H04N 1/62

(54) **Method, apparatus and computer program for transforming digital colour images**

(30) Priority: 06.05.2004 EP 04291165
(71) Applicant: Océ-Technologies B.V., 5914 CC Venlo (NL)
(72) Inventor: Boust, Clotilde M-Pierre, 75011 Paris (FR)
(74) Representative: Rongen, Josephus Wilhelmus

(57) **Abstract**

A first digital colour image with pixels having colour values is transformed to a second digital colour image with pixels having transformed colour values, the colour values being defined in a selected colour space. Pixel clusters are formed for the first digital colour image whereby pixels of a pre-defined category are grouped in a particular cluster in the selected colour space. The colour values of the pixels in a particular cluster are transformed such that transformed colour values belong to a pre-defined area associated to the particular cluster in the selected colour space, said pre-defined area consisting of memory colours of the same pre-defined category. The second digital colour image can be rendered on a display screen or on a print medium.

## Description

The invention relates to a method of transforming digital colour images, wherein a first digital colour image with pixels having colour values is transformed to a second digital colour image with pixels having transformed colour values, the colour values being defined in a selected colour space, said method comprising the step of forming clusters for the first digital colour image whereby pixels of a pre-defined category are grouped in a particular cluster in the selected colour space.

In the areas of desktop publishing and graphic arts industries, it is highly desirable to reproduce colour images with a satisfying perceived quality. With other words, reproduced image should be eye pleasing to the observer. Digital image data can be computed by a computer system, arise from digital scanning of photographic images, digital photography, or other sources. Digital colour images can be rendered on many rendering devices such as printing apparatus using electrophotography or ink jet techniques, display screens like cathode-ray tube display screens, liquid crystal display screens etc. Colour rendering devices typically apply three or four process colours. These colours may be primary colours red (R), green (G) and blue (B) as in a liquid crystal display screen, or may be secondary colours cyan (C), magenta (M) and yellow (Y) to which black (K) may be added as in printing devices. To render colour images with even a higher quality and extended colour gamut, hi-fi printers use seven process colours (for example R, G ,B, C, M, Y, B).

A digital colour image, obtained for example by scanning a photograph, is made of pixels having colour values defined for example in an RGB colour space. When the colour image is to be printed by a colour printer, like an ink-jet printer using a number of process colours (for example C, M, Y, K in the form of ink), the colour image has to be converted into a colour space suited for the printing process. The converted image is characterised by the same number of colour planes as the number of process colours. Each colour plane (for example C, M, Y or K) is a continuous-tone image and is independently processed into a binary data by a raster imaging processor (RIP) according to well-known halftoning techniques. A digital halftoned image is basically represented as binary digital data generated and/or stored in a computer system.

Before the colour image is processed into binary data for rendering purposes, colour correction is usually carried out. Many kinds of corrections are known in the art and aim at rendering the image with a quality that will be eye pleasing to the observer. A colour correction modifies the colour values of colour point, like the hue, saturation or lightness. The colour correction may be carried out by a system operator who observes an image on a display unit and adjusts colours and other image parameters until the result is pleasing. Once the system operator has obtained a satisfying result, the modified image can be stored in a memory of a computer-controlled system. Since such an operator assisted method is time-consuming, methods using an algorithm to perform the transformation tasks have been proposed.

A method of transforming digital colour images, wherein a first digital colour image with pixels having colour values is transformed to a second digital colour image with pixels having transformed colour values, the colour values being defined in a selected colour space, said method comprising the step of forming clusters for the first digital colour image whereby pixels of a pre-defined category are grouped in a particular cluster in the selected colour space is known from EP 1014172. Print algorithms described therein are provided in a digital photo-finishing system and allow to change the appearance of the skin tones in a print to a selected preference. The preference may be obtained by providing a specific skin tone preference according to a given geographic region of a country and/or world. An algorithm identifies whether skin tones are present in the image file. This may be done by determining the colorimetric values of the image pixels scanned by a scanner. Predetermined colorimetric parameters may be set for each of the desired skin types, such as Caucasian, Oriental, Asian, Indian or Black. In accordance with predetermined colorimetric parameters, portions are identified in the image. Having determined that a particular portion is of a particular flesh tone, the flesh tone may be modified to a particular hue and/or colour. The adjustment of the colorimetric parameters of the identified portions may consist of a reduction in skin tone colourfulness and a reduction in the contrast of the reproduction in the identified skin portions.

EP 1139656 A1 discloses a method for transforming a file of digital colour data representing a colour image into a new file of digital colour data where one or more colours have been transformed to one or more new colour locations where their reproduction is known to be preferred. Certain colours are specified that represent the centres of regions of colour space that are to be modified. An example of such a specified colour is an attractive magnet that attracts colours toward itself. In an off-line process, a three-dimensional lookup table can be calculated. Subsequently the lookup table is used to apply the transformation to images.

In a known method for image enhancement (Optimizing color reproduction of natural images, S.N. Yendrikhovskij, F.J.J. Blommaert and H. de Ridder, Final Program and Proceedings of IS&T/SID, the 6th Color Imaging Conference: Color Science, Systems, and Applications, Scottsdale, AZ, USA, November 17-20, 1998, 140-145), a global transformation is made on all pixels of an image. A colourfulness enhancement or reduction is performed in an algorithm, based on colour transformations that slightly increase or decrease the colourfulness of digitised images, for example by multiplication of the saturation values by a pre-defined constant.

The problem of the known methods is that the colour tones obtained after transformation lack of naturalness. The invention seeks to provides a method of transforming a digital colour image in which these problems are mitigated.

In accordance with the invention, this object is accomplished by a method comprising the step of transforming the colour values of the pixels in a particular cluster to transformed colour values belonging to a pre-defined area associated to the particular cluster in the selected colour space, said pre-defined area consisting of memory colours of the same pre-defined category. That way, the rendered image appears natural to a person observing the rendered image since the presence of memory colours in an image is particularly important for the naturalness judgement. Memory colours can be grouped in pre-defined areas of pre-defined categories. Memory colours are obtained for example from previous studies focussing at visuo-cognitive processing of images by observers. A memory colour is having a colour value that is kept in people's memory and generally, people find that images having memory colours are natural and therefore pleasant. It is believed that naturalness is given by the degree of match between object attributes as observed in a reproduced image with standards (i.e. memory colours) for these attributes as stored in people's memory. According to the method of the invention, it is achieved that pixels having an influence on an image's naturalness are transformed to areas of memory colours.

In an embodiment of the method according to the invention, each pre-defined category is corresponding to a category of items. In general the quality of a rendered image is judged by its naturalness, whereby certain items are particularly relevant for judging the naturalness. This embodiment allows the naturalness and thus the quality of the rendered image to be enhanced.

Preferably, a category of items is selected from the group including sky, foliage or skin categories. The rendered colours of certain items are especially important for naturalness, such as for example the blue of the sky, the green of the foliage or skin tones.

Preferably, the step of forming clusters for the first digital colour image comprises an analysis of the pixels performed in a spatial space being the plane of the first digital colour image. The clusters that are formed are thus dependent of the scene of the image to be transformed. This way of forming clusters is more efficient than the methods based on an analysis of the colour values only and therefore, the image after transformation is more pleasant than with known methods.

The analysis of the pixels may comprise an automated categorisation of the pixels of the first digital colour image based on geometrical criteria. This embodiment enables an efficient way of forming clusters.

Preferably, the step of forming clusters furthermore comprises an analysis of the colour values of pixels in the first digital colour image. Forming clusters based on both the recognition of characteristic shapes in the image and an analysis of the colour values works particularly well.

Preferably, the step of transforming the colour values of the pixels in a particular cluster is done according to a transformation function which transforms the colour values of the pixels in a particular cluster according to a pixel displacement in the selected colour space in a direction defined by a vector joining a main colour value of the particular cluster to a main colour value of the associated pre-defined area.

In a preferred embodiment, a displacement vector joining a pixel to be transformed in a particular cluster to a transformed pixel in the associated pre-defined area is having the same modulus as the vector joining a main colour value of the particular cluster to a main colour value of the associated pre-defined area. The original shape of the cluster is thus maintained after transformation, meaning that the colour differences between the pixels inside a cluster are essentially maintained.

The displacement vector may have a modulus which decreases as a function of the distance in the selected colour space between the pixel to be transformed and the main colour value of a particular cluster.

The invention also relates to an apparatus for transforming digital colour images, wherein a first digital colour image with pixels having colour values is transformed to a second digital colour image with pixels having transformed colour values, the colour values being defined in a selected colour space, the apparatus comprising: a memory for storing a digital colour image; and a processing unit for processing the first digital colour image, the processing unit comprising: a cluster module for forming clusters for the first digital colour image whereby pixels of a pre-defined category are grouped in a particular cluster in the selected colour space. According to the invention, the apparatus further comprises a conversion module for transforming the colour values of the pixels in a particular cluster to transformed colour values belonging to a pre-defined area associated to the particular cluster in the selected colour space, said pre-defined area consisting of memory colours of the same pre-defined category.

According to another aspect of the invention, the apparatus further comprises means for rendering the second digital colour image with the transformed colour values.

Such an apparatus can be a part of a printing apparatus provided with a network connecting unit for receiving externally generated print orders and a printing unit. The image with pixels having transformed colour values may thus be rendered on a display screen, for example of a computer, be printed by a printing apparatus, for example of the type suited to print digital photographs.

The invention also relates to a computer program for causing an apparatus to execute the transformation of digital colour images according to an embodiment of the invention.

The invention will now be explained with reference to the following exemplified embodiment of the present invention, and illustrated by reference to the drawings. This embodiment serves to illustrate the invention and should not be regarded as a limitation thereof.
- Fig. 1: represents a distribution of pixels having colour values in a colour space, the pixels being obtained from a digitised image of a natural scene.
- Fig. 2: represents a distribution of pixels having transformed colour values being memory colours, obtained after the transformation of the pixels from a digitised image of a natural scene.
- Fig. 3: is an example of a transformation of colour values of pixels;
- Fig. 4: is a flow diagram for a transformation method according to an embodiment of the invention;
- Fig. 5: is a diagram showing essential parts of an ink jet printer to which the invention is applicable.
- Fig. 6: is a simplified component diagram of a printing apparatus for use in connection with the invention.

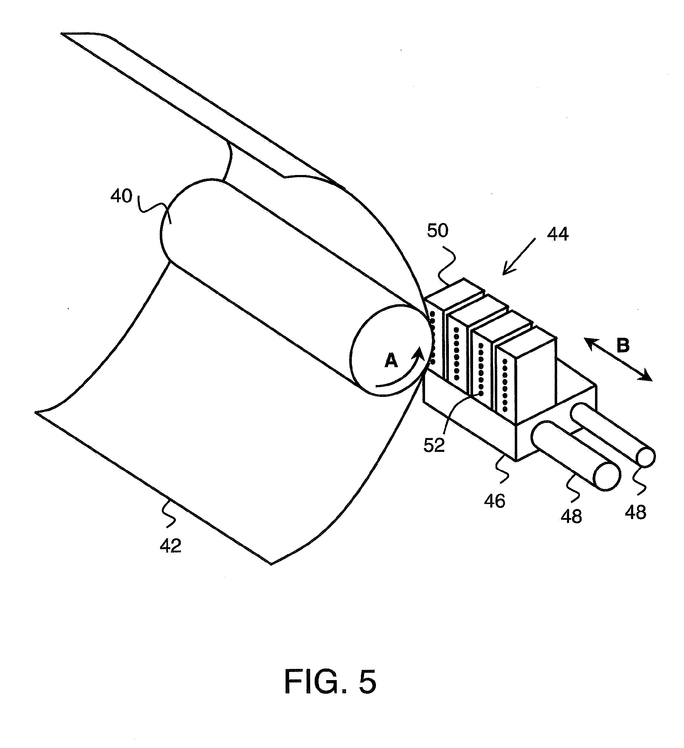

The invention is particularly useful for high-quality rendering of images captured by a scanner or a digital camera. Rendering the image can be performed in a printing apparatus as the one shown partly in Fig. 5. As is shown therein, an ink jet printer comprises a platen 40 driven for rotation in the direction of an arrow A for transporting a paper sheet 42 which serves as an image recording medium. A printhead 44 is mounted on a carriage 46 which is guided on guide rails 48 and travels back and forth in the direction of an arrow B along the platen 40 so as to scan the paper sheet 42. The printhead 44 comprises four nozzle heads 50, one for each of the basic colours yellow, magenta, cyan and black. An ink is supplied to a nozzle head 50 from an ink container (not shown) through a pipe. On the side facing the sheet 42, each nozzle head 50 has a linear array of nozzles 52. The nozzle heads 50 are energised in accordance with image information of an image to be printed on the sheet 42. Signals are transmitted to the printhead 44 through a connector (not shown) mounted on the carriage 46. Signals in accordance with print data arise from a control unit connected to the printhead 44 through a connector (not shown). Each nozzle 52 can be energised separately so as to eject an ink droplet which will form a dot at a corresponding pixel position on the sheet 42. Thus, when the printhead 44 performs a single stroke along the platen 40, each nozzle 52 can be energised to draw a single pixel line of the intended image. As a result, during each forward or backward stroke of the carriage 46, the printhead 44 will print a swath or band of the image, and the number of pixels lines of the swath will correspond to the number of nozzles 52 present in each nozzle array. Although only eight nozzles 52 are shown per nozzle head 50 in Fig. 5, in practice, the number of nozzles is considerably larger.
Transformation of the captured image data may be required to obtain images rendered with an enhanced colours quality.

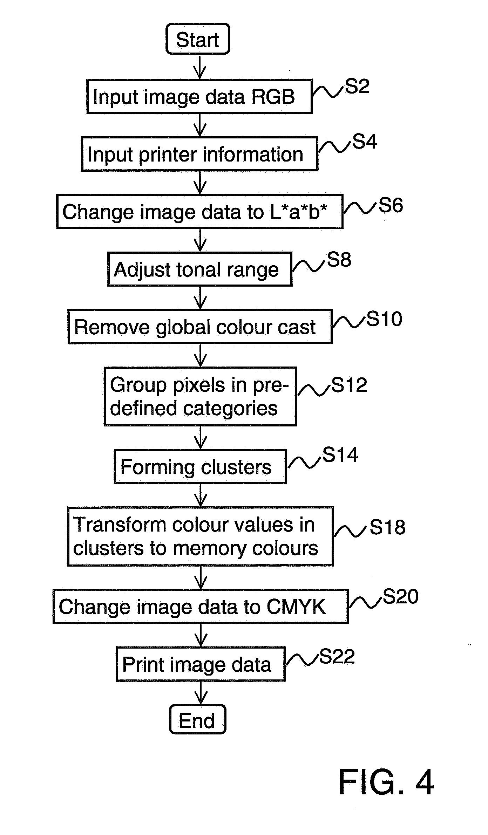

The present invention is now explained with reference to Fig. 4 which is a flow diagram for a transformation method according to an embodiment of the invention. The transformation method can be applied to a first digital colour image comprising pixels having colour values . Such colour image data, representing for example the data of a photograph of a scene captured by a digital camera, may consist of RBG data. Step S2 consists in importing image data to a computer system on which an algorithm is installed that will perform the data transformation. The next step S4 consists in inputting printer information to the computer system. Printer information is required to render the transformed image data properly, as will be explained below for step S22. If the transformed data is to be rendered on a display device like a computer screen, the display device information is inputted in step S4 instead of the printer information. The image data, originally for example in RGB format, is converted into a perceptual colour space like a CIE L*a*b* colour space (step S6). Working in a perceptual colour space is advantageous because differences between two neighbouring points directly relate with the apparent visual colour difference. The L*a*b* colour space, a perceptual linear space, can be chosen, as well as L*C*h and CIE L*u*v* colour spaces. Conversion methods from RGB to CIE L*a*b* are well known. A possibility is to perform conversion from RGB to XYZ colour space, and afterwards from XYZ colour space to a CIE L*a*b* space, using standard equations.

In step S8 an adjustment of the tonal range is performed. This can be done in order to improve the contrast of the image, for example by resetting the black and white points to 0 and 255, respectively. An image may furthermore have colour cast in specific areas or in the entire image, due for example to improper lighting conditions when a photographic emulsion was exposed. In such a case, global colour cast removal may be performed in step S10, using a dedicated algorithm modifying globally the colour values of the image pixels.

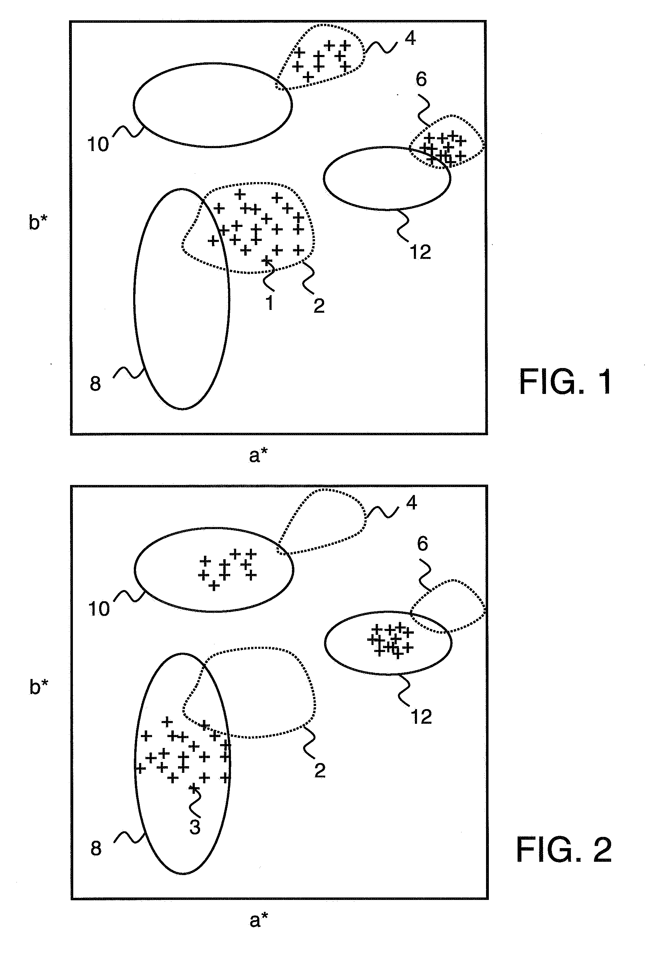

In step S12, the pixels of the first digital colour image are analysed in order to form clusters for the first digital colour image whereby pixels of a pre-defined category are grouped (S14). Depending on the result of the analysis, it is determined whether a particular pixel belongs to a pre-determined category, in which case it becomes part of a cluster of a pre-defined category. This step is illustrated in Fig. 1, where the distribution of pixels having colour values is represented for the first digital colour image in a perceptual and approximately uniform colour space, like the L*a*b* colour space. Three clusters 2, 4, 6, formed by pixels belonging to three distinct pre-defined categories for the first digital colour image, are indicated in Fig. 1. These clusters correspond for example to sky (cluster 2), foliage (cluster 4) and to skin categories (cluster 6). These categories of items are chosen since they represent the three most familiar and frequently reproduced categories of colours. In this example, the pre-defined categories are referred to as 'sky', 'foliage', and 'skin' tones for convenience only. Mostly, human faces, foliage and sky are found in images of natural scenes. However, colours of other objets like water could be part of similar clusters of pre-defined categories.

In step S12, the recognition of the pixels is in a first instance carried out in the spatial space, i.e. in the plane of the image, according to geometrical criteria. The aim is to select pixels belonging to a pre-defined category, for example a category of items, such as foliage, skin or sky. Certain areas being likely to have colour values corresponding to pre-defined categories are recognised depending on parameters such as shape and/or position in the image. For the recognition of skin-tone areas, use could be made of the fact that a face has a certain oval shape, comprises eyes etc. For sky areas, it could be considered that the position of the sky in an image is usually on top, combined with the fact that the shape is approximately rectangular. The spatial position for areas in the image containing foliage is usually on bottom if it is grass etc. This type of pixel recognition is of advantage compared with recognition methods based on the analysis of colour values only. It is observed that when the selection criterion is the belonging to pre-defined categories (such as skin, sky and foliage), the transformed images present a more natural aspect than when pixels are selected on the basis of their colour values only. An example is the transformation of an image containing a scene where a person having a Caucasian type of skin is wearing a pink T-shirt. When the selection criterion is the belonging to the pre-defined category 'skin', only the pixels representing really skin are selected. The colour values of these pixels are transformed according to a function described thereinafter. The function used to transform the colour values depends on the shape of the cluster formed by the selected pixels, and of the distribution of the pixels inside the cluster. When only real 'skin' pixels are present in the cluster, the transformation will work properly and produce a pleasant transformed image. On the contrary, when pixels are selected on the basis of their colour value only, the cluster contains pixels corresponding to skin tones as well as pixels corresponding to the T-shirt on the person. The pixels originating from the T-shirt influence the shape of the cluster and the distribution of the pixels therein, which result in a transformation leading to images presenting a lack of naturalness. This is mainly due to the fact that the pixels in a cluster are transformed according to a function taking into account the shape of a cluster and the distribution of pixels inside a cluster.

In step S12, in addition to a recognition based on geometrical criteria, the selection may be furthermore based on a complementary analysis of the colour values of the firstly selected pixels. For example, pixels with colour values close to a certain characteristic colour value are selected for good, while pixels with colour values deviating too much from a certain characteristic value are rejected. For example, if the pixels forming a piece of building in an image to be transformed have been firstly wrongly selected as belonging to a pre-defined category 'sky' according to the geometrical criteria 'on top of the image' and 'approximately rectangular', they will be rejected if their colour values are too far from a characteristic colour value for sky, i.e. tones like grey or blue.

When the recognition is achieved, the clusters are formed (S14), the pixels belonging to a pre-defined category in the first digital colour image being grouped in a cluster. For example, the clusters 2, 4 and 6 in Fig. 1 are formed.

In step S18, the algorithm transforms the colour values of the pixels of each particular cluster in such a way that the transformed colour values are memory colours belonging to a pre-defined area associated to the given cluster. Colour values of memory colours are essentially determined by human psychological factors. Images are perceived by humans in terms of attributes such as hue, colourfulness and lightness. It is assumed that the perceived colour attributes are compared with colour attributes recalled from observers memory in association with similar categories of objects. The object categories are extracted from the population of apparent object colours seen in the past.

Similarity of the perceived and recalled attributes influences the perceived naturalness of reproduced colours. Generally, people prefer to see an image with reproduced colours that agree with memory colours rather than with the actual colours of the original scene. This is especially true for natural scenes that very often comprise objects like human skin, foliage and sky.

The result of the step S18 is illustrated in Fig. 2, wherein the areas 8, 10 and 12 are pre-defined areas of memory colours. The areas 8, 10 and 12 represent areas in the L*a*b* diagram of memory colours for respectively sky, foliage and skin tones. The areas 8, 10 and 12 are associated, respectively, to the clusters 2, 4 and 6, since they are of the same pre-defined category. The memory colours areas are determined by previous studies, wherein people's preferences concerning colour reproduction are analysed. Examples of such studies can be found in Sergej N. Yendrikhovskij's doctoral thesis, entitled Color reproduction and the naturalness constraint, Eindhoven, Technische Universiteit Eindhoven, 1998, ISBN 90-386-0719-9.

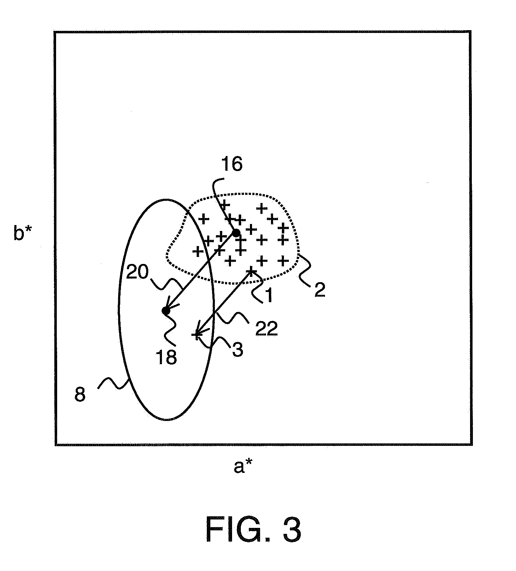

As Fig. 3 shows, a main colour value, represented by the point 16 can be determined for the cluster 2. A main colour value is a representative value of a cluster of colour points, corresponding for example to the point of gravity of all points in this cluster. In a similar way, a main colour value, represented by the point 18 in Fig. 3 can be determined for the memory colour area 8. The vector 20 is joining the point 16, representing the main colour value of the cluster 2, to the point 18, representing the main colour value of the area 8. In Fig. 3, the areas 8, 10 and 12 have the form of ellipses and the main colour values for these areas are simply the centre of the respective ellipses. The transformation function which transforms the colour values of the pixels is done according to a displacement (i.e. a shift) of the pixels in the direction defined by the vector 20. More precisely, the displacement vector 22 joining the pixel 1 to be transformed in the cluster 2 to the transformed pixel 3 in the associated pre-defined area 8 is having the same direction as the vector 20 joining a main colour value 16 of the cluster 2 to the main colour value 18 of the associated pre-defined area 8.

The modulus of the vector 18, joining a point representing a pixel to be transformed to a point representing the transformed pixel could have the same modulus as the vector 20. In such a case, the original shape of the cluster containing the pixels to be transformed is not modified by the transformation. Alternatively, the transformation can be such that the modulus of a vector 18 is a decreasing function of the distance of the point representing the pixel to be transformed to the main colour value of the cluster to which the point belongs. The closer a point representing a pixel is to the main colour value of a cluster, the further it will be displaced. In that case, the shape of the original cluster is modified.

In step S18, the colour values of all pixels of the cluster 2 are transformed in a similar way as described for the pixel 1. The pixels of the cluster 4 are transformed as well, for example according to a vector joining the main colour value of the cluster 4 to the main colour value of the associated area 10. In a similar way, the pixels of the cluster 6 are transformed, using a displacement determined by the direction of the vector joining the main colour value of the cluster 6 to the main colour value of the area 12. After the colour values of the selected pixels have been transformed, it is possible to render the image with the transformed colour values.

In step S20, the transformed colour values may be transformed to a CMYK colour space, to enable rendering the image data on a printer using these four basic colorants.

In step S22, the image data can be halftoned and be output by a printer. The image with transformed colour values is thus rendered.

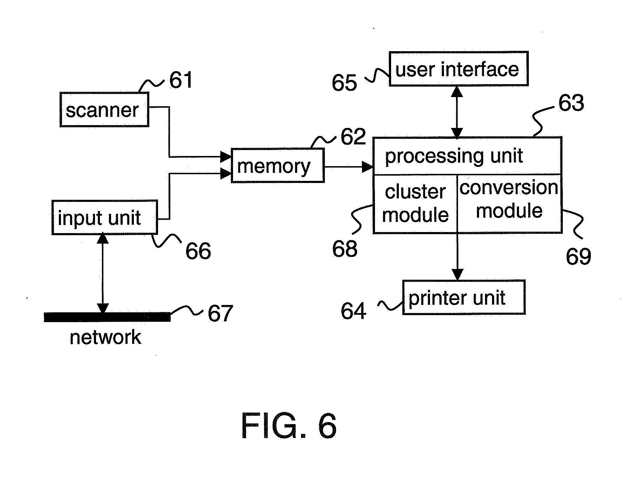

Fig. 6 shows a diagrammatic representation of the most important parts of a digital printer to which the invention as described above is applied. This apparatus is provided with a user interface 65 and an input unit 66 for receiving digital images made elsewhere, e.g. via a network 67, so that the apparatus is used as a printer.

The apparatus is also provided with a scanner 61 having a device for transforming a recorded image (for example a photograph) to a digital image, a memory 62 for storing the digital image, a processing unit for processing the digital image and a printing unit 64 for printing the processed digital image on paper or any suitable medium. The apparatus is also suited for use as a photocopier. For printing digital colour images, the printing unit 64 contains a number of colour printing sub-units, each printing a basis colour. For example four colour printing sub-units use the basis colorants cyan, yellow, magenta and black in the form of ink or toner. Colours are rendered with raster techniques such as dithering or error diffusion.

The input image originating from the scanner 61 or the input unit 66 is a colour image of which the colour values are to be transformed according to an embodiment of the invention . The input unit can be used to input image data of a photograph taken elsewhere by digital recording camera. To make a transformed print, the processing unit 63 is provided with a cluster module for searching the main colour values and a conversion module for transforming the colours of an image to a transformed colour values according to the invention.

The processing unit 63 is connected to the operating unit 65, being a user interface. The operator interface 65 comprises selection means for switching on or off the transformation of a digital colour image according to the invention, and may possibly be also provided with setting means for manually setting some parameters of the transformation function, for example by means of a slide or button, to indicate which type of correction parameters should be taken into account.

When the invention in used in a printer in a network environment, the user can, for example, indicate by means of the printer driver at his workstation that a colour image must be transformed according to his preferences and then printed with the transformed colours. In that case, a processing device in the printer transforms the digital colour image to a digital colour image with transformed colour values, and prints the transformed image.

The transformed image may also be displayed on the display unit 68 for a visual control of the result of the transformation.

It is also possible to carry out the colour transformation in a separate computer, for example the workstation of a user, and then send the transformed digital image to a printer or store it in a mass memory.

Although the invention has been explained by reference to the above-described exemplified embodiment, it is not limited thereto. It will be clear to the skilled person that other embodiments are possible within the scope of the claims.

## Claims

1. Method of transforming digital colour images, wherein a first digital colour image with pixels having colour values is transformed to a second digital colour image with pixels having transformed colour values, the colour values being defined in a selected colour space, said method comprising the step of
forming clusters for the first digital colour image whereby pixels of a pre-defined category are grouped in a particular cluster in the selected colour space, **characterised in that** the method further comprises the step of transforming the colour values of the pixels in a particular cluster to transformed colour values belonging to a pre-defined area associated to the particular cluster in the selected colour space, said pre-defined area consisting of memory colours of the same pre-defined category.

2. Method of transforming digital colour images according to claim 1, **characterised in that** each pre-defined category is corresponding to a category of items.

3. Method of transforming digital colour images according to claim 2, **characterised in that** a category of items is selected from the group including sky, foliage or skin categories.

4. Method of transforming digital colour images according to any of the preceding claims, **characterised in that** the step of forming clusters for the first digital colour image comprises an analysis of the pixels performed in a spatial space being the plane of the first digital colour image.

5. Method of transforming digital colour images according to claim 4, **characterised in that** the analysis of the pixels comprises an automated categorisation of the pixels of the first digital colour image based on geometrical criteria.

6. Method of transforming digital colour images according to claim 4 or 5, in which the step of forming clusters furthermore comprises an analysis of the colour values of pixels in the first digital colour image.

7. Method of transforming digital colour images according to any of the preceding claims, **characterised in that** the step of transforming the colour values of the pixels in a particular cluster is done according to a transformation function which transforms the colour values of the pixels in a particular cluster according to a pixel displacement in the selected colour space in a direction defined by a vector joining a main colour value of the particular cluster to a main colour value of the associated pre-defined area.

8. Method of transforming digital colour images according to claim 7, **characterised in that** a displacement vector joining a pixel to be transformed in a particular cluster to a transformed pixel in the associated pre-defined area is having the same modulus as the vector joining a main colour value of the particular cluster to a main colour value of the associated pre-defined area.

9. Method of transforming digital colour images according to claim 7, **characterised in that** the displacement vector is having a modulus which decreases as a function of the distance in the selected colour space between the pixel to be transformed and the main colour value of a particular cluster.

10. Apparatus for transforming digital colour images, wherein a first digital colour image with pixels having colour values is transformed to a second digital colour image with pixels having transformed colour values, the colour values being defined in a selected colour space, the apparatus comprising:
a memory (62) for storing a digital colour image; and
a processing unit (63) for processing the first digital colour image, the processing unit comprising:
a cluster module (68) for forming clusters for the first digital colour image whereby pixels of a pre-defined category are grouped in a particular cluster in the selected colour space,
**characterised in that** the apparatus further comprises
a conversion module (69) for transforming the colour values of the pixels in a particular cluster to transformed colour values belonging to a pre-defined area associated to the particular cluster in the selected colour space, said pre-defined area consisting of memory colours of the same pre-defined category.

11. Apparatus for transforming digital colour images according to claim 10,
**characterised in that** the apparatus further comprises means (64) for rendering the second digital colour image with the transformed colour values.

12. Printing apparatus provided with a network connecting unit for receiving externally generated print orders, a printing unit (44) and an apparatus according to claim 10.

13. Image display device provided with a display screen and an apparatus according to claim 10.

14. Computer program for causing an apparatus to execute the transformation of digital colour images, wherein a first digital colour image with pixels having colour values is transformed to a second digital colour image with pixels having transformed colour values, the colour values being defined in a selected colour space, the computer program comprising computer-executable instructions for forming clusters for the first digital colour image whereby pixels of a pre-defined category are grouped in a particular cluster in the selected colour space, **characterised in that** the algorithm further comprises the step of transforming the colour values of the pixels in a particular cluster to transformed colour values belonging to a pre-defined area associated to the particular cluster in the selected colour space, said pre-defined area consisting of memory colours of the same pre-defined category.

15. Computer-readable medium comprising the computer program according to claim 14.
